# EUROPEAN PATENT APPLICATION

(11) **EP 3 670 980 A1**
(43) Date of publication of application: **24.06.2020**
(21) Application number: 18214117.6
(22) Date of filing: 19.12.2018
(51) Int. Cl.: F16K 7/14, F16K 7/20, F16K 31/06

(54) **A MEDIUM SEPARATED VALVE**

(71) Applicant: Buschjost GmbH, Bad Oeynhausen (DE)
(72) Inventor: KNAPPMEIER, Friedrich, 32545 Bad Oeynhausen (DE); PAMPEL, Jan, 32545 Bay Oeynhausen (DE)
(74) Representative: Schmalz, Günther

(57) **Abstract**

The present invention relates to a valve assembly comprising a housing, a flexible diaphragm, a support member, a plunger disposable by an actuator between a first and a second position of the second valve. The diaphragm is suitable for opening and closing a flow path and comprises a flange section clamped to a part of the housing, an intermediate section, a compression section, and a plunger section operationally connected to an end of the plunger and adapted to close the flow path. In the second valve position the plunger section exercises a compression force in direction lengthwise of the compression section which is abutted by the support member and as a consequence the length of the compression section in the second valve position, in comparison to the first position, is reduced and the width of the compression section in the second valve position is increased.

## Description

This invention relates to a valve assembly having a flexible diaphragm, more specifically to a medium separated valve having a flexible diaphragm.

Medium separated valves are known to provide fluid and gas control in a variety of applications. In such valves, medium separation is achieved through an isolating member, the most common of which are a rolling diaphragm or a bellows. Such valves are suitable for, for instance, medical applications, food and beverage applications, or chemical industry applications. A variety of liquids, both viscous and inviscid, can be controlled by means of a medium separated valve.

Bellows or rolling diaphragms are two of the most commonly used means of separating a medium from the valve mechanism. However, neither one offers sufficient reliability and wear resistance.

Bellows typically include undercuts and gaps which collect residue and dirt, thus reducing their hygiene worthiness. Additionally, bellows have short lifetimes and can only sustain limited pressures. This is due to actuation loads from an actuating piston acting only on a small portion of the bellows, resulting in formation of stress concentration zones.

Typical rolling diaphragms provide unbalanced force distribution, as they are prone to deviations from an axial actuation path. Moreover, working pressures and the lifetime of these diaphragms is severely limited due to unevenly distributed pressures on the diaphragm as well as a lack of proper support of the diaphragm.

Upon actuating the valve separated from the medium with a rolling diaphragm, the diaphragm geometry changes, due to "rolling" of the diaphragm against its support. Typical supports for rolling diaphragms have a conical indentation, which facilitates the rolling. The indentation nevertheless exposes the upper surface of the diaphragm to atmospheric pressure, as there is an air gap between the support and the top surface of the diaphragm. Thus, the actuation mechanism must act against the diaphragm and the force applied to the top of the diaphragm due to atmospheric pressure. It is usually the case that electrical actuation mechanisms for such valve systems need high power ratings. It is known that powerful electrical actuators are costly to purchase, maintain, and replace. The larger the rated power, the hotter the solenoid may become during operation. It is common for solenoids used in such systems to reach the temperature of 120°C - 130°C. High temperatures adversely affect the lifetime of components, which in known media separated valves are made from plastics. High temperature conditions also limit the choice of plastics and only certain high-grade plastics can be used in these conditions. Moreover, "rolling" sections of the diaphragm are prone to excessive stretching which results in accelerated wear and tear. Hence, a common problem for rolling diaphragms is a limited lifetime, reduced reliability, and high operating costs.

It is an aim of the present invention to provide an improved valve assembly which solves at least one of the abovementioned problems.

According to the first aspect of the present invention there is provided a valve assembly comprising:
- a housing;
- a flexible diaphragm for opening and closing a flow path, the diaphragm comprising a flange section, an intermediate section, a compression section and a plunger section;
- a support member;
- a plunger configured to be disposed by an actuator between a first valve position and a second valve position along an actuating axis; wherein
   - the flange section is clamped to a part of the housing;
   - the intermediate section extends between the flange section and the compression section and the compressions section extends between the intermediate section and the plunger section;
   - the plunger section is operationally connected to an end of the plunger, and adapted to close the flow path; and
   - wherein a length of the compression section is defined as the extension between the intermediate section and the plunger section in parallel to the actuation axis and wherein the width of the compression section is defined as the extension of the compression section in radial direction with respect to the actuation axis;
   - wherein in the second valve position the plunger section exercises a compression force in direction of the length of the compression section which is abutted by the support member and as a consequence the length of the compression section in the second valve position is reduced in comparison with the first valve position and the width of the compression section in the second valve position is increased in comparison to the first valve position.

Advantageously, the valve assembly of the first aspect of the present invention has a flexible diaphragm with an intermediate section which remains in contact with a supporting member irrespective of the position of the valve. Thus, the size of the surface exposed to atmospheric pressure is constant in both valve positions, thereby reducing the amount of force that the valve actuation system must counteract in order to close the valve. A smaller net closing force facilitates using less powerful actuation mechanisms and smaller biasing springs, whilst still achieving the desired operating parameters.

The valve assembly may also include an air gap between the plunger and the central section when the valve is in the first position. The central section expands into the air gap when the valve is in the second position.

The presence of the air gap facilitates unconstrained up and down motion of the plunger, as the frictional interaction between the plunger and the diaphragm is negligible.

The support member may be constituted by the intermediate section by adapting the thickness of the intermediate section such that the deflection of the intermediate section by the compression force may be less than the distance between the end of the plunger in the first position and the second position.

The support member may be a separate element engaging with the housing and that the intermediate section and the support member may be adapted to match each other such that the intermediate section may be in permanent contact with the support member.

The plunger may include a rod and a plunger head disposed at an end of the rod, which is the end of the plunger, wherein the central section of the diaphragm is adapted to retain the plunger head.

Advantageously, the diaphragm fits tightly around the plunger head, thus ensuring there is no slipping therebetween. As a result, the position of the central section can be precisely controlled at all times, if the position of the plunger is known.

In the first valve position the central section may close the flow path and in the second valve position the central section may open the flow path. Alternatively, in the first valve position the central section may open the flow path and in the second valve position the central section may close the flow path.

Another advantage of the valve assembly is that the compression of the central section of the diaphragm does not affect the position of the intermediate section relative to the support member. Such an arrangement enables maintaining the intermediate section in contact with the support member, so as to minimise the exposure of the diaphragm to atmospheric pressure.

The diaphragm is therefore more robust and has high lifetime, due to small loads applied to the diaphragm.

The valve assembly may include a biasing spring operatively connected to the plunger, which biasing spring may be configured to bias the plunger into the first position and, optionally, the actuator being configured when actuating the plunger to transit the plunger into the second positon.

The valve assembly may include a biasing spring operatively connected to the plunger, which biasing spring may be configured to bias the plunger into the second position and, optionally, the actuator being configured when actuating the plunger to transit the plunger into the first position.

The diaphragm may be made from a rubber material.

A diaphragm made from rubber is easy to clean and cheap to manufacture.

The support member and the diaphragm may be disposed circumferentially about the actuation axis.

The valve may be a medium separated valve and may be electromechanically actuated.

The support member may include a surface of the support member which is in contact with the intermediate section is in a plane that extends perpendicular to the actuation axis.

Advantageously, the support surface provides constant support of the diaphragm and it prevents rolling of the diaphragm about the support member. Therefore, no frictional interaction occurs between the diaphragm and the elements of the valve assembly, which improves the durability of the diaphragm.

According to the second aspect of the present invention there is provided a diaphragm for a valve assembly as described above, the diaphragm comprising:
a flange section configured to be clamped to secure the diaphragm;
a central section extending along an axis, wherein the central section is adapted to be contracted in the direction along the axis and to expand in the direction perpendicular to the axis when the valve is actuated; and
an intermediate section connecting the central section and the flange section, wherein the intermediate section is configured to be in contact with a support member of the valve in any valve position between the first valve position and the second valve position.

The central section may include a receptacle for receiving a plunger, the receptacle including a plunger head receiving section and a plunger rod receiving section, wherein the plunger rod receiving section is configured to contract upon actuating the valve.

The intermediate section may be configured to be aligned with the flange section when the valve is in not actuated.

The plunger rod receiving section may have a first average thickness when the valve is not actuated, and a second average thickness when the valve is actuated, wherein the first thickness is substantially larger than the first thickness.

The diaphragm may be made from a rubber material.

According to the third aspect of the present invention there is provided a method of assembling a valve assembly as described above, the method comprising the steps of:
inserting a spindle into a diaphragm;
disposing the diaphragm and the spindle on a housing;
clamping the diaphragm between a support ring and the housing using;
securing the clamped diaphragm with a top bracket;

According to the fourth aspect of the present invention there is provided a method of actuating the valve assembly as described above, comprising the steps of:
providing the valve assembly as described above;
actuating the valve to move a spindle axially upwards;
compressing a central section of a diaphragm, so as to open the valve.

Further benefits and advantages of the present invention will become apparent after a careful reading of the detailed description with appropriate reference to the accompanying drawings.
Figure 1 is a side section view of a valve assembly according to the first aspect of the present invention when the flow path is closed.
Figure 2 is a side section view of a valve assembly according to the first aspect of the present invention when the flow path is open.
Figure 3 is an isometric view of an actuation assembly when mounted in a bracket.
Figure 4 is an isometric view of a housing of the present invention.
Figure 5 is a close-up view of the valve assembly of Figure 1.
Figure 6 is a close-up view of the valve assembly of Figure 2.
Figure 7 is a side section view of a diaphragm.
Figure 8 is a close-up view of the valve assembly with combined support member and diaphragm when the flow path is open.
Figure 9 is a close-up view of the valve assembly with combined support member and diaphragm when the flow path is closed.
Figure 10 is a partially exploded side section view of the valve assembly according to the first aspect of the present invention.

### Detailed Description

At the outset, it should be clearly understood that like reference numerals are intended to identify the same structural elements, portions or surfaces consistently throughout the several drawing figures, as such elements, portions or surfaces may be further described or explained by the entire written specification, of which this detailed description is an integral part. Unless otherwise indicated, the drawings are intended to be read (e.g., crosshatching, arrangement of parts, proportion, degree, etc.) together with the specification, and are to be considered a portion of the entire written description of this invention. As used in the following description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader.

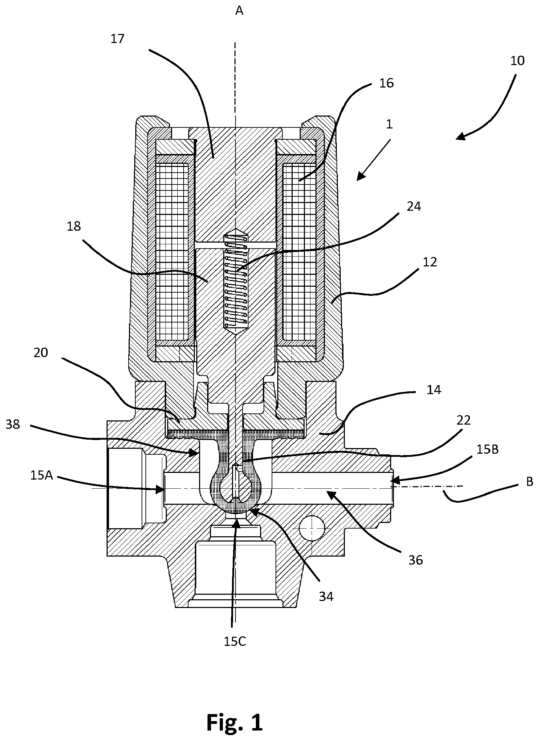

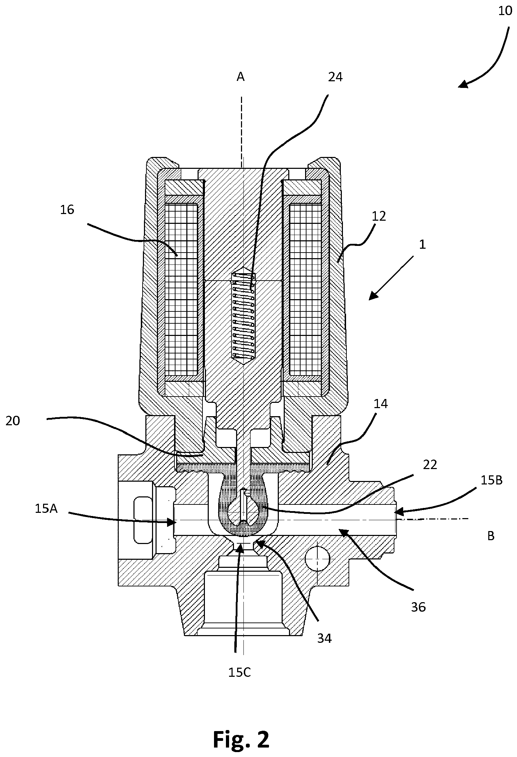

A valve assembly 10 in accordance with the first aspect of the present invention is shown in Figures 1 and 2. The valve assembly 10 comprises a bracket 12, a housing 14, a coil 16, a pole core 17, a plunger 18, a support member 20, a diaphragm 22, and a spring 24.

The valve assembly 10 has an actuation axis A. The valve assembly 10 extends along the actuation axis A and has a substantially cylindrical shape.

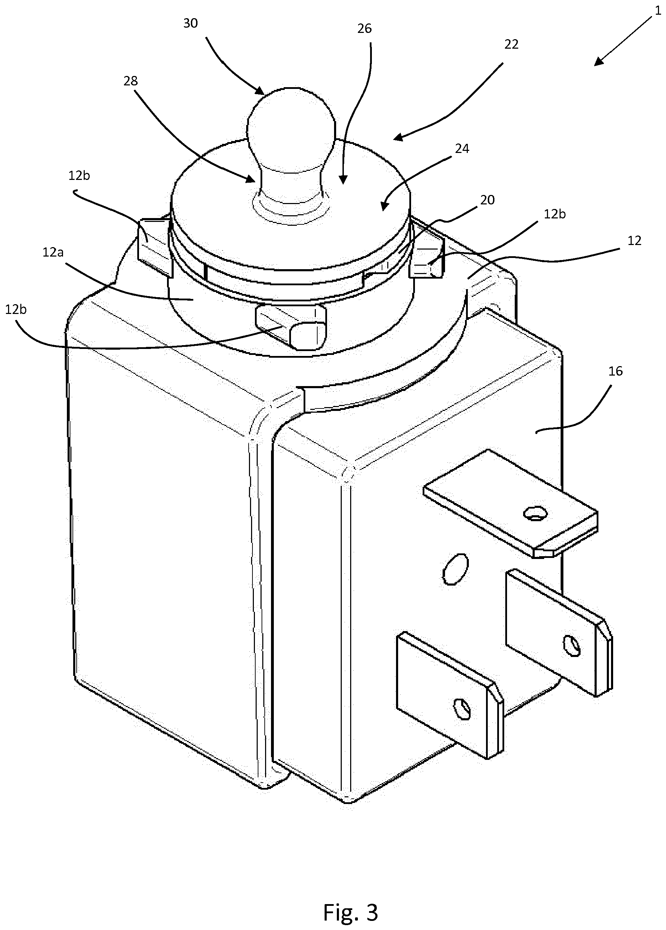

Referring to Figure 3, the bracket 12 includes a cylindrical end 12a, which may be a male or a female part of a connector, such as a bayonet connector. The cylindrical end 12a includes a set of radial pins 12b, disposed around a circumference of the cylindrical end 12a. The bracket 12 centres an electro-mechanical actuation mechanism 1 on the actuation axis A.

With reference to Figures 1 - 3, the actuation mechanism 1 includes the coil 16, the pole core 17, the biasing spring 24, and the plunger 18. The bracket 12 is operatively connected to the coil 16 such that it reacts magnetic forces applied to the plunger 18 by the coil 16 when the coil 16 is energized. Alternative actuation methods are also possible, for example hydraulic or pneumatic.

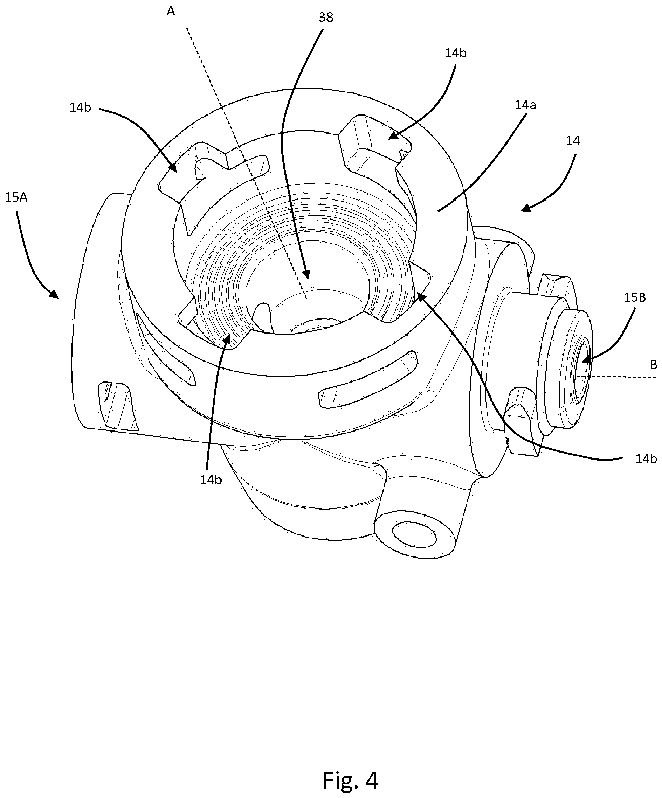

As shown in Figure 4, the housing 14 includes an annular opening 14a and an opening 38, both extending along the actuation axis A. The annular opening 14a defines one end of the housing, whereas the opening 38 is located within the housing 14. The housing 14 also defines a flow axis B along which extends a fluid channel 36. The channel 36 extends from a first port 15A to a second port 15B. One of the first 15A or second 15B ports can be a fluid inlet, a fluid outlet, or a blank port. A male or a female connector (not shown) may be disposed around the first port 15A or the second port 15B. Thus, the housing 14 provides a means for connecting valve assemblies 10 into a valve stack, with the male connector of one valve assembly 10 assembled with the female connector of another valve assembly. A plurality of such valve assemblies 10 can be connected in series, with leftmost or rightmost port blanked off, and a fluid communication channel established between the two blanks. The actuation axis A and the flow axis B coincide at a point inside the housing 14 and are substantially perpendicular to each other. The fluid channel 36 and the opening 38 jointly define a volume within which an operating medium is held. The medium can be gaseous or liquid, and may have varying densities and viscosities. Although the valve assembly 10 is shown in the Figures as a valve assembly being part of a valve stack, the valve assembly 10 may also be a single valve, that is a valve with one inlet port and one outlet port.

The annular opening 14a of the housing 14 has a plurality of receptors 14b disposed circumferentially around an inside diameter of the annular opening 14a. With reference to Figures 3 and 4, the receptors 14b are configured to receive the pins 12b of the bracket 12. The pins 12b and the receptors 14b thus form a bayonet connection, where the annular opening 14a receives the cylindrical end 12a. However, the annular opening 14a and the cylindrical end 12a can form any other suitable coupling, such as a snap on coupling, a threaded coupling, etc.

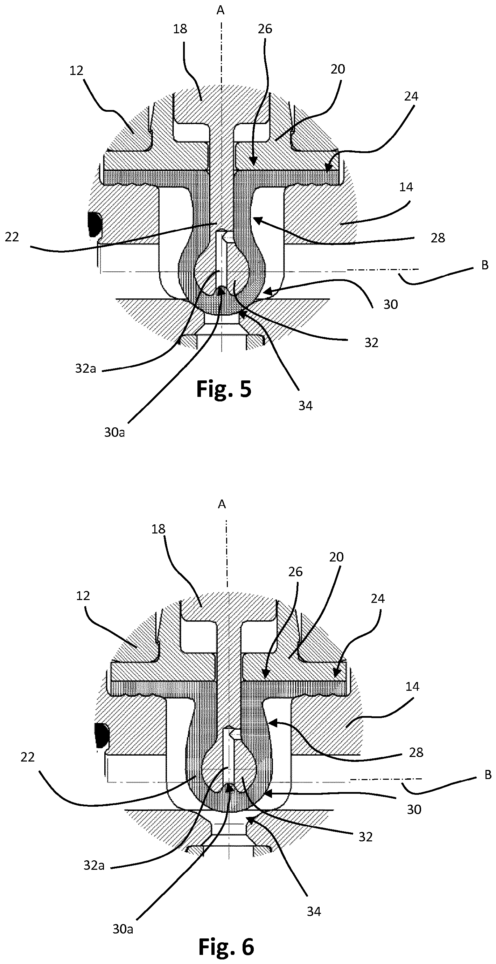

Referring now to Figures 1 and 5, which show the valve assembly 10 in the closed position, and to Figures 2 and 6, which show the valve assembly 10 in the open position, the housing 14 also includes a seat 34. The seat 34 is engageable by the diaphragm 22 to open or close a flow path. The valve seat 34 is disposed around a third port 15A. By way of example, the flow path may lead from the first port 15A through the third port 15C, or from the second port 15B through the third port 15C. An alternative fluid path can also lead from the third port 15C towards any of the first 15A or second 15B ports. The third port 15C may be an outlet port, although it may also serve as an inlet port.

As shown in Figures 1 and 2, the plunger 18 is arranged along the actuation axis A. The plunger 18 is made from a ferro-magnetic material, such that it can be attracted by the pole core 17 when the coil 16 is energized and a magnetic field is created by electric current flowing through the coil 16. The plunger 18 may be non-magnetic if the actuation mechanism 1 is not electromechanical. The plunger 18 includes a head 32 which is disposed at one end thereof. In the assembled valve assembly 10, the head 32 is located within the housing 14. The plunger 18 includes a cavity within which the spring 24 is disposed along the actuation axis A. The plunger 18 has two positions - an open position and a closed position. To reach the open position, the plunger 18 is lifted upwards along the actuation axis A upon actuation of the valve assembly 10. This upward motion compresses the spring 24. To move the plunger 24 into the closed position, the actuator is switched off, and the compressed spring releases its potential energy to effectuate a downward movement of the plunger towards the closed position.

The support member 20 is disposed around the actuation axis A and between the bracket 12 and the housing 14. The support member 20 has a geometry which facilitates establishing a snap-on connection between the support member 20 and the bracket 12. More specifically, the support member 20 may include a collar which interacts with an interior diameter of the bracket so as to establish a snap-on connection therebetween. Any other reversible connection is also possible.

The diaphragm 22 is clamped between the housing 14 and the support member 20, wherein the bracket 12 disposed on top of the support member 20 to secure the support member 20 and force the diaphragm 22 onto the housing 14 to provide a fluid-tight interface separating the actuation mechanism 1 from the medium flowing through the valve assembly 10. Therefore, the valve assembly 10 is classified as a medium separated valve.

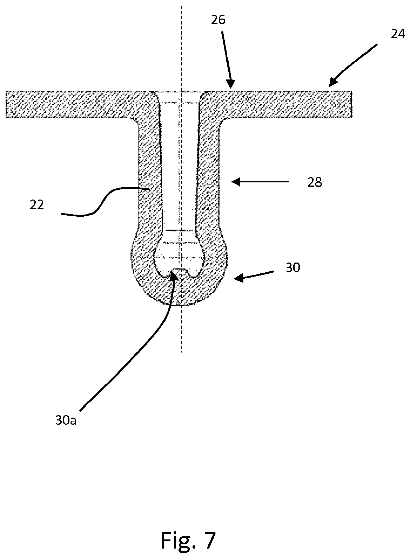

Referring to Figure 7, the diaphragm 22 includes a plunger section 30, a central section 28, an intermediate section 26, and a flange section 24. The diaphragm 22 may be a substantially cylindrical, although other shapes which fit into the valve assembly 10 are also envisaged. Figure 7 illustrates the diaphragm 22 'as made', prior to assembling it in the valve assembly 10. Typical diaphragm 22 is made from a stretchable material, for instance rubber of silicone. All parts of the diaphragm 22 are therefore stretchable. The central section 28 has a production diameter and a production length, which change depending on the position of the plunger 18 of the valve assembly 10.

The plunger section 30 includes a protrusion 30a for evacuating gases from an area between the plunger 18 and the diaphragm 22 during assembly of these two components.

The diaphragm 20 is flexible and has a generally different shape when not assembled. The central section 28 and the plunger section 30 are stretchable, therefore, in a non-assembled state, shown in Figure 7, both have smaller average diameters in comparison to the assembled state shown, for example, in Figures 1 and 2. Dimensions of the flange section 24 and the intermediate section 26 are substantially the same irrespective of whether the valve assembly 10 is assembled or not.

With reference to Figures 1, 2, 5, and 6, the flange section 24 is clamped between the support member 20 and the housing 14. The flange member 24 and the intermediate section 26 extend radially away from the actuation axis A and are disposed circumferentially around the actuation axis A. The central section 28 extends axially along the actuation axis A from the intermediate section 26. The central section 28 extends along the actuation axis A and is blinded at one end by the plunger section 30. The diaphragm 22 has an opening at an end opposite to the plunger section 30. The central section 28 and the plunger section 30 together define a receptacle for receiving the plunger 18 between the blinded part and the opening. The plunger 18 is insertable into the opening of the diaphragm 22.

The diaphragm 22 can be made of any material that exhibits sufficient flexibility, such as rubber or silicone. The plunger section 30 fits tightly around the plunger head 32, such that any motion of the plunger head 32 due to the actuation of the valve assembly 10 results in the motion of the plunger section 30. There is a gap of 0.1 mm to 0.2 mm between the central section 26 and the shaft of the plunger. The gap is so small that it cannot be seen in the drawings. This amount of tolerance is advantageous in that the central section 26 expands into the empty space when the valve assembly 10 is actuated.

Referring to Figures 1 and 2, the plunger 18 is spring biased in the direction along the actuation axis A by the spring 24, and it can move between a closed position and an open position by actuating the actuator 16. The head 32 of the plunger 18 includes a channel 32a for evacuating gas and pressure build up from the diaphragm 22 during assembling together the diaphragm 22 and the plunger 18. The gases are pushed through the channel 32a by the protrusion 30a of the diaphragm 22, thus evacuating any excess lubricant or gases contained in the area between the plunger section 30 and the head 32.

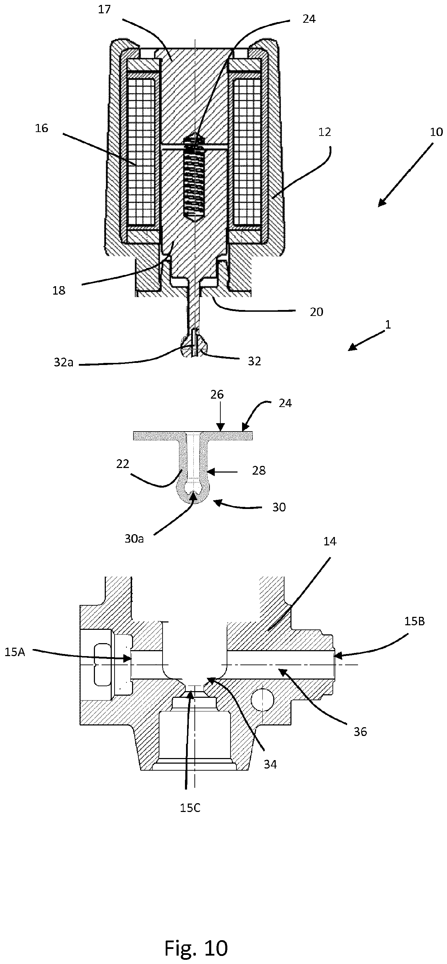

With reference to Figures 3 and 10, the valve assembly 10 is of a modular construction. Damaged or worn out parts of the assembly can therefore be quickly and easily removed and replaced with new ones. The bracket 12, which holds the actuation assembly 1, can interlock with the housing 14 by means of a bayonet connector, however any suitable quick-release connector is possible. Thus, it is possible to gain access to each individual part of the valve assembly 10 in order to carry out routine or emergency maintenance work. The whole valve assembly 10 is of a modular construction, with assembly or disassembly being simplified by various reversible connections being established between various subsystems of the valve assembly 10. The valve assembly 10 can also be combined into a block of valves in a manner known to these skilled in the art.

The valve assembly 10 according to the invention may be assembled using of a jig in a known manner. The plunger head 32, or the inside of the diaphragm 22, are lubricated, for example by means of oil, grease, or other suitable lubricant, before inserting the plunger 18 into the diaphragm. The lubricated head 32 slides into the diaphragm 22, and any excess lubricant or air trapped between the plunger head 32 and the plunger section 30 may escape through the channel 32a, whilst the jig is forcing the two components into alignment. Other suitable assembly methods are also possible, such as assembly by hand.

In use, in the closed position, the actuation mechanism 1 is not energised and the biasing spring 24 biases the plunger 18 downwards so as to push the plunger section 32 of the diaphragm 22 onto the seat 34, thus closing the valve assembly 10, as shown in Figure 1. The plunger section 30 of the diaphragm 22 is therefore compressed between the housing 14 and the plunger 18. The plunger 18 and the valve seat 34 form a ball and socket connection, with the head 32 of the plunger 18 being partially received in the seat 34. The diaphragm 22 seats the valve seat 34, so as to close the flowpath. In the closed position, no part of the central section 28 or the intermediate section 26 is under tension or compression. Therefore, in the closed position, the length of the central section 28 is the same as the production length.

Moreover, the diaphragm 22 is in contact with the support 20 via the intermediate section. 'In contact' means specifically that there is no net force in the direction along the actuation axis A acting on the support member 20. Therefore, the intermediate section 26 is in contact with the support 20 when the valve assembly 10 is in the closed position.

The biasing force of the spring 24 is counteracted by the actuator 16 so as to transit the valve assembly 10 into the open position, shown in Figure 2. In the open position, the plunger 18 is lifted along the actuation axis A, so as to enable the fluid or gaseous medium to pass through the housing 14. The upward motion of the plunger 18 results in the upward motion of the plunger section 30 of the diaphragm 22. Because the plunger section 13 of the diaphragm 22 fits closely around the head 32 of the plunger 18, the upward movement of the plunger 18 results in compression of the central element 28. Since the central section 28 is compressed, the support member 20 supports the diaphragm by reacting the compression force. Compression of the central section 28 forces the intermediate section 26 into abutment with the support 20. Therefore, the compression force that is applied by the plunger 18 through the central section 28 and through the intermediate section 26 is reacted by the support 20. Therefore, the support 20 is fixed in space, hence the diaphragm 22, which is clamped at its flange section 24, is constrained. The compression of the central section 28, causes the central section 28 to stretch from its production diameter, so as to fill the air gap between the central section 28 and the plunger 18. There is also some degree of radial expansion in the intermediate section 26. The magnitude of radial expansion is proportional to the Poisson's ratio of the material from which the diaphragm 22 is made.

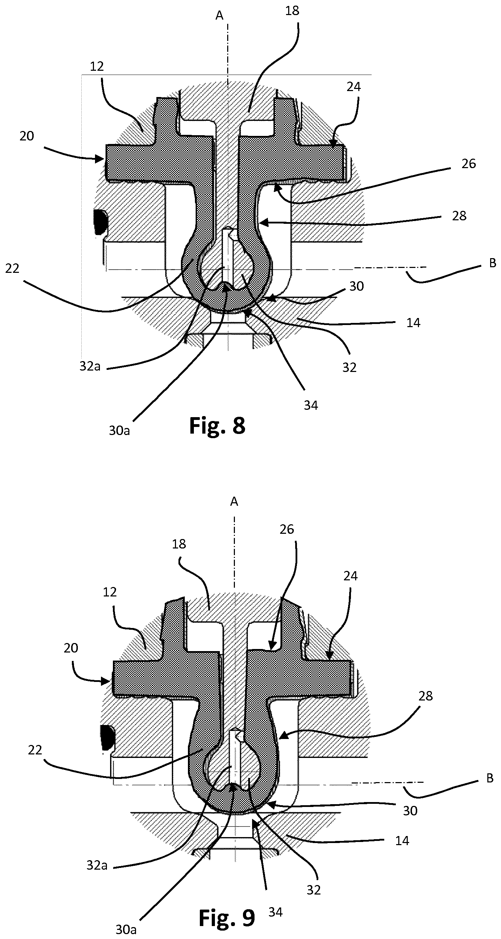

Referring to figures 8 and 9, optionally, the support member 20 and the diaphragm 22 are a unitary component. In such an embodiment, there would be no need for an additional support member 20. The support member 20 of this embodiment would be sufficiently thick to experience little to no deflection upon application of an axial load along the actuation axis A. However, the diaphragm 22 of this embodiment does not significantly differ from the diaphragm of Figures 1 and 2 in terms of its structure. This diaphragm 22 also includes a flange section 24, an intermediate section 26, a central section 28 and a plunger section 30. The plunger section 30 and the central section 28 jointly define a receptacle into which a plunger can be inserted. The diaphragm 22 is clamped between the bracket 12 and the housing 24 so as to separate the medium flowing across the fluid channel 36 within the housing 14 and the actuation mechanism 1 which is located above the diaphragm 22.

The principles of operation of such a diaphragm are substantially the same as that of the embodiment of Figures 1 and 2. The main difference is that, in the open position, the intermediate section 26 does not abut the support member 20. The support member 20 is part of the diaphragm 22 and it has a sufficiently large thickness in the axial direction to not deflect significantly upon application of the compressive load. The deflection of the intermediate section 26 by the compression force is therefore less than the distance between the plunger head 32 in the first position and the second position.

## Claims

1. A valve assembly (10) comprising:
- a housing (14);
- a flexible diaphragm (14) for opening and closing a flow path, the diaphragm (22) comprising a flange section (24), an intermediate section (26), a compression section (28) and a plunger section (30);
- a support member (20);
- a plunger (18) configured to be disposed by an actuator (16) between a first valve position and a second valve position along an actuating axis (A); wherein
- the flange section (24) is clamped to a part of the housing (14);
- the intermediate section (26) extends between the flange section (24) and the compression section (28) and the compressions section (28) extends between the intermediate section (26) and the plunger section (30);
- the plunger section (30) is operationally connected to an end of the plunger (18), and adapted to close the flow path; and
- wherein a length of the compression section (28) is defined as the extension between the intermediate section (26) and the plunger section (30) in parallel to the actuation axis (A) and wherein the width of the compression (28) section is defined as the extension of the compression section (28) in radial direction with respect to the actuation axis (A);
- wherein in the second valve position the plunger section (30) exercises a compression force in direction of the length of the compression section (28) which is abutted by the support member (20) and as a consequence the length of the compression section (28) in the second valve position is reduced in comparison with the first valve position and the width of the compression section (28) in the second valve position is increased in comparison to the first valve position.

2. The valve assembly (10) of claim 1, wherein the support member (20) is constituted by the intermediate section (26) by adapting the thickness of the intermediate section (26) such that the deflection of the intermediate section (26) by the compression force is less than the distance between the end of the plunger (18) in the first position and the second position.

3. The valve assembly (10) of claim 1, wherein the support member (20) is a separate element engaging with the housing (14) and that the intermediate section (26) and the support member (20) are adapted to match each other such that the intermediate section (26) is in permanent contact with the support member (20).

4. The valve assembly (10) of any of claims 1 - 3, wherein the plunger (18) includes a rod and a plunger head (32) disposed at an end of the rod, which is the end of the plunger (18), wherein the central section (30) of the diaphragm (22) is adapted to retain the plunger head (32).

5. The valve assembly (10) of any of claims 1 - 4, wherein in the first valve position the plunger section (30) closes the flow path and in the second valve position the plunger section (30) opens the flow path.

6. The valve assembly (10) of any of claims 1 - 4, wherein in the first valve position the plunger section (30) opens the flow path and in the second valve position the plunger section (30) closes the flow path.

7. The valve assembly (10) of any preceding claim, wherein the valve assembly includes a biasing spring (24) operatively connected to the plunger (18), the biasing spring (24) configured to bias the plunger (18) into the first position and the actuator (16) being configured, when actuating the plunger (18), to transit the plunger (18) into the second positon.

8. The valve assembly (10) of any of claims 1 - 6, wherein the valve assembly (10) includes a biasing spring (24) operatively connected to the plunger (18), the biasing spring (24) configured to bias the plunger (18) into the second position and the actuator (16) being configured, when actuating the plunger (18), to transit the plunger (18) into the first position.

9. The valve assembly (10) of any preceding claim, wherein there is an air gap between the plunger (18) and the central section (28) when the valve assembly (10) is in the first position, wherein the air gap is filled by the central section (28) expanding in the direction perpendicular to the actuation axis (A) when the valve assembly (10) is in the second position.

10. The valve assembly (10) of any preceding claim, wherein a surface of the support member (20) which is in contact with the intermediate section (26) is in a plane that extends perpendicularly to the actuation axis (A).

11. A diaphragm (22) for a valve assembly (10) of any preceding claim, comprising:
a flange section (24) configured to be clamped to the housing (14) to secure the diaphragm (22);
a central section (28) extending along an actuation axis (A), wherein the central section (28) is adapted to be contracted in the direction along the actuation axis (A) and to expand in the direction perpendicular to the actuation axis (A) when the valve assembly (10) is actuated; and
an intermediate section (26) connecting the central section (28) and the flange section (24), wherein the intermediate section (26) is configured to be in contact with a support member (20) of the valve assembly (10) in any valve assembly position.

12. The diaphragm (22) of claim 11, wherein the central section (28) includes a receptacle for receiving a plunger (10), the receptacle including a plunger head receiving section (30) and a plunger rod receiving section, wherein the plunger rod receiving section is configured to contract upon actuating the valve assembly (10).

13. The diaphragm of claim 11, wherein the plunger rod receiving section is configured to expand upon actuating the valve.

14. A method of assembling a valve assembly (10) of claims 1 to 10, comprising the steps of:
assembling the actuator (16), the plunger (18), and the support member (20) inserting the plunger (18) into the diaphragm (22);
disposing the diaphragm (22) and the plunger (18) on the housing (14); and
clamping the diaphragm (22) between the support member (20) and the housing (14).

15. A method of actuating the valve assembly (10) of claims 1 to 10, comprising the steps of:
providing the valve assembly (10) of claims 1 to 10;
actuating the valve to lift the plunger (18) along the actuation axis (A); and
compressing the central section (28) of the diaphragm (22), so as to open the valve assembly (10).
